(19) Europäisches Patentamt
European Patent Office
Office européen des brevets

(11) **EP 2 645 313 A1**

(12) **EUROPEAN PATENT APPLICATION**

(43) Date of publication:
**02.10.2013 Bulletin 2013/40**

(51) Int Cl.:
*G06Q 10/00* (2012.01)   *G05B 23/02* (2006.01)
*G06Q 10/06* (2012.01)

(21) Application number: **12197731.8**

(22) Date of filing: **18.12.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **27.03.2012 JP 2012072127**

(71) Applicant: **Kabushiki Kaisha Toshiba**
**Tokyo 105-8001 (JP)**

(72) Inventors:
• **Sato, Makoto**
**Tokyo, 105-8001 (JP)**
• **Nagasaka, Mari**
**Tokyo, 105-8001 (JP)**
• **Hasegawa, Yoshiaki**
**Tokyo, 105-8001 (JP)**

(74) Representative: **HOFFMANN EITLE**
**Patent- und Rechtsanwälte**
**Arabellastrasse 4**
**81925 München (DE)**

(54) **An apparatus and a method for determining a maintenance plan**

(57)    Maintenance actions, maintenance costs each differently corresponding to each maintenance action, a reference strategy and a fault model, are stored. If a system is maintained by each maintenance action at a first timing, if the system is degraded by the fault model from the first timing to a predetermined timing, and if the system is maintained by the reference strategy from a second timing after passing a predetermined period from the first timing to the predetermined timing, at least one search timing is set into a search period from the first timing to the second timing. A maintenance action value of each maintenance action is calculated at the search timing, based on an output and the maintenance cost of the system maintained from the first timing to the predetermined timing. An optimum maintenance action is selected from the maintenance actions, based on the maintenance action value of each maintenance action.

FIG.1

EP 2 645 313 A1

**Description**

FIELD

Embodiments described herein relate generally to an apparatus and a method for determining a maintenance plan.

BACKGROUND

In a device such as a production system of which productivity is fallen by fault-degradation, decision making to perform a maintenance action such as overhaul or component-replacement at which timing is important. Even if the replacement is over-performed or insufficient, the productivity is not optimum. Here, occurrence of fault is a stochastic event. Accordingly, determination of a maintenance plan based on probability theory is important.

As one thereof, for example, maintenance plan making support device and method using dynamic programming, disclosed in JPA(Kokai) 2005-11327, is known. In this method, degradation level of a system of a maintenance target is represented as a state transition model having Markov model, and an optimum action is determined by simulation. However, in a system such as a large scaled PV (Photovoltaic power generation) system of which the number of PV modules as components therein is enormous, effective planning of the optimum plan is difficult.

As mentioned-above, a method for determining the optimum maintenance plan is proposed. Here, by setting a degradation status of a device to a random variable, time change of a state vector collecting the degradation status of all devices is represented as the state transition model assuming Markov property. However, in the PV (Photovoltaic power generation) system, a degradation target thereof is PV module. Especially, in the large scaled PV system, PV modules of which the number thereof is above several hundreds ~ one thousand are connected to one power conditioner, and formed as one system (PV array). Briefly, this is a Markov model having the large number of states. As a result, determination of the optimum solution is difficult, i.e., it is problem.

SUMMARY

The present invention is directed to an apparatus and a method able to determine an effective maintenance plan of a system.

According to one embodiment, a maintenance action determination apparatus includes a maintenance action and cost database, a reference strategy database, a fault model database, a simulation unit, and a maintenance plan search unit. The maintenance action and cost database stores a plurality of maintenance actions executable for a system and a plurality of maintenance costs each differently corresponding to each of the plurality of maintenance actions. The reference strategy database stores a reference strategy determining a maintenance action to be executed for the system, based on a degradation or an output of the system. The fault model database stores a fault model stochastically representing an occurrence of the degradation. The simulation unit is configured, if the system is respectively maintained by each maintenance action at a first timing, if the system is degraded by the fault model from the first timing to a predetermined timing, and if the system is maintained by the reference strategy from a second timing after passing a predetermined period from the first timing to the predetermined timing, to set at least one search timing in a search period from the first timing to the second timing, and to calculate a maintenance action value of each maintenance action at the search timing, based on the output and a maintenance cost corresponding to the maintenance action by which the system is maintained from the first timing to the predetermined timing. The maintenance plan search unit is configured to select an optimum maintenance action from the plurality of maintenance actions, based on the maintenance action value of each maintenance action.

BRIEF DESCRIPTION OF THE DRAWINGS

Fig.1 is a block diagram of a hardware component according to one embodiment.
Fig.2 is a block diagram of a maintenance plan determination apparatus according to one embodiment.
Fig.3 is a flow chart of processing of optimum maintenance determination method according to one embodiment.
Fig.4 is one example of maintenance plan search method.
Fig.5 is a block diagram of an optimum strategy state value calculation unit in Fig.2.
Figs.6A~6E are examples of a PV facility DB in Fig.2.
Figs.7A and 7B are examples of power generation performance of a PV facility.
Fig.8 is one example of a fault model DB in Fig.2.
Figs.9A and 9B are examples of a maintenance strategy DB in Fig.2.
Fig.10 is one example of an execution result of a maintenance action.

Fig.11 is one example of a reference strategy long term simulation.

Fig.12 is another example of the reference strategy long term simulation.

Fig.13 is a first example of calculation of a reference strategy state value.

Fig.14 is one example of an optimum strategy short term simulation.

Fig.15 is one example of calculation of an optimum strategy state value, a state value, and a maintenance action value.

Fig.16 is a block diagram of a photovoltaic power generation system as a maintenance plan target.

Fig.17 is a second example of calculation of the reference strategy state value.

Fig.18 is a third example of calculation of the reference strategy state value.

Fig.19 is a fourth example of calculation of the reference strategy state value.

DETAILED DESCRIPTION

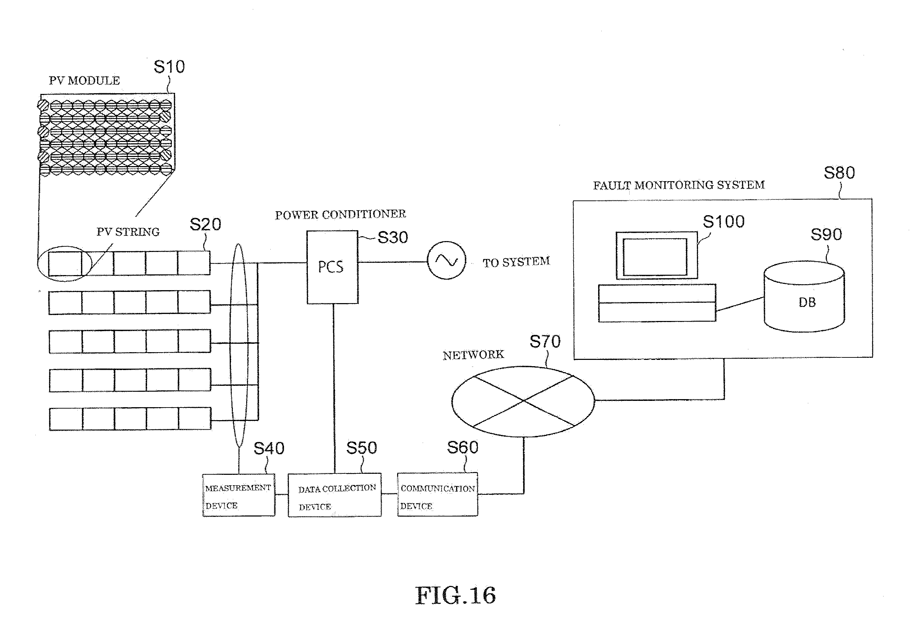

Fig.16 is a block diagram of a PV (Photovoltaic power generation) system as a target of maintenance plan according to one embodiment. In Fig.16, a PV module S10 is a device to generate a power by accepting sunshine. When fault occurs, this device is replaced. The PV module can output a voltage such as several tens V (volt). In order to output the higher voltage, PV modules are connected in serial, which is a PV string S20.

Furthermore, PV strings are connected in parallel, which is a PV array. By unit of the PV array, a power line is connected to a power conditioner (PCS) S30. By connecting PV strings in parallel, an electric current (Hereinafter, it is called a current) having a high ampere can be outputted. By converting the voltage/ current generated by DC (direct current) to these by AC (alternating current), the PCS transmits the power to a system or a load, and performs MPPT control to determine operation voltage/ current of the PV array. The MPPT control is executed by changing the load so as to maximum a product of voltage and current (output from the PV array) .

In order to measure a voltage to operate the PV system and a current outputted from the PV system, a measurement device S40 is installed. The measurement is variously performed by unit of the PV string, a sub string of the PV string, or the PV module. Measured data is controlled by a data collection device S50, and transmitted to a fault monitoring system S80 (existing at a remote site) by a communication device S60 via a network S70.

In the fault monitoring system S80, a fault monitor DB S90 to store power generation data (measured) and facility information, and a fault monitoring server S100, are installed. The fault monitoring server S100 has a fault diagnosis function to detect a fault part from collected data and a function to indicate a customer engineer to diagnose the fault part.

The present embodiment is related to a phase after a fault module is detected in this system. Briefly, as to the fault module detected by diagnosis of the fault monitoring system S80, an apparatus for deciding how to maintain and performing a maintenance plan thereof is provided.

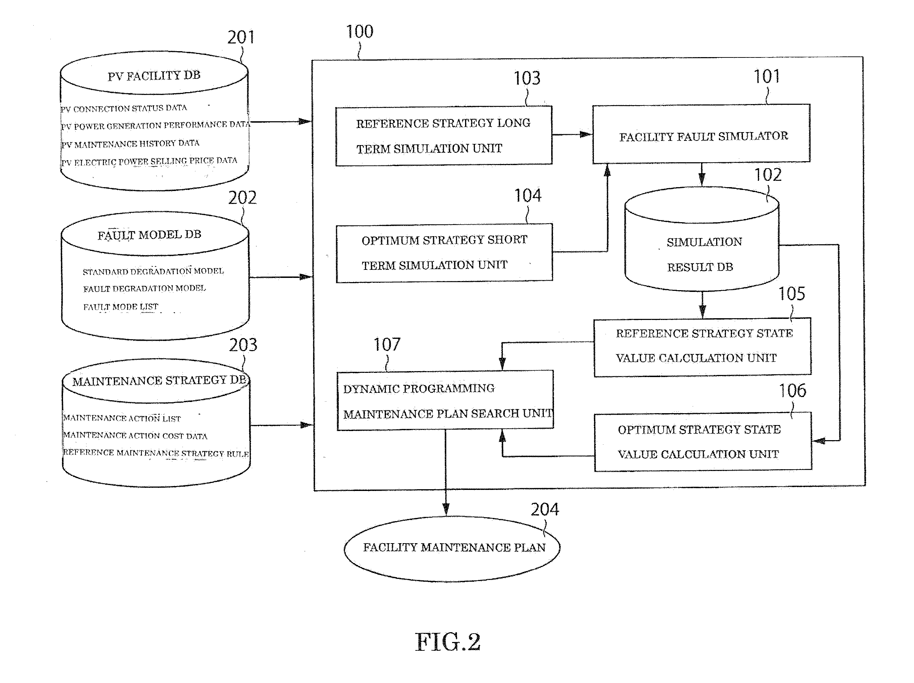

Fig.2 is a block diagram of an apparatus for determining an optimum maintenance plan according to one embodiment. As shown in Fig.2, the apparatus 100 includes a facility fault simulator 101, a simulation result DB 102, a reference strategy long term simulation unit 104, a reference strategy state value calculation unit 105, an optimum strategy state value calculation unit 106, and a dynamic programming maintenance plan search unit 107. In the PV system using dynamic programming, this apparatus 100 is effective for the case that module-fault badly affects on all the system.

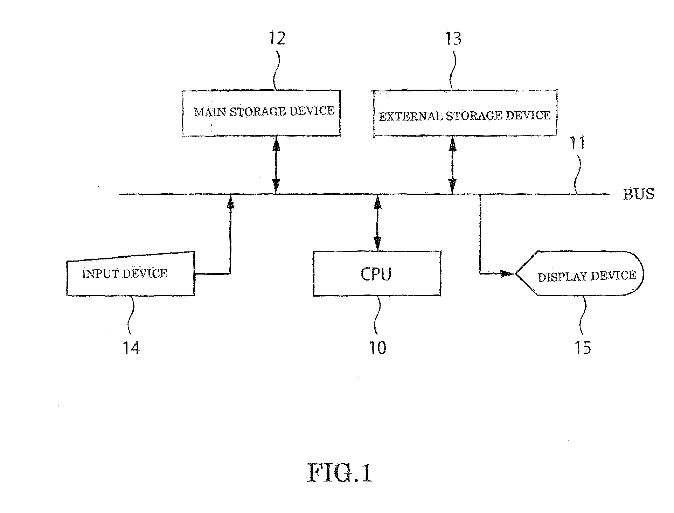

Each unit of the apparatus 100 in Fig.2 can be realized as a program module. In this case, by executing a program (including each program module) with a computer system shown in Fig.1, each function thereof can be realized. This computer system includes a. CPU 100 to execute program instructions, a main storage device 12 such as a memory, an external storage device 13 such as a hard disk, a magnetic disk or an optical disk, an input device 14 to input data by a user, a display device 15 to display data to the user, and a bus mutually connecting these devices. The program is stored in the external storage device 13. The CPU 10 extends this program into the main storage device 12, and executes the extended program by arbitrarily reading.

In Fig.2, a PV facility DB 201 stores data related to power generation performance such as present degradation status of the PV system. A fault model DB 202 stores fault models which are modeled for predicting occurrence of aging/ fault degradation of the PV module. A maintenance strategy DB 203 stores a maintenance strategy such as a list of maintenance actions to cope with PV module-fault, and a cost to execute the maintenance action. Based on data stored in the PV facility DB 201, the fault model DB 202 and the maintenance strategy DB 203, the apparatus 100 determines an optimum maintenance action for the present degradation status, and outputs this action as a facility maintenance plan 204.

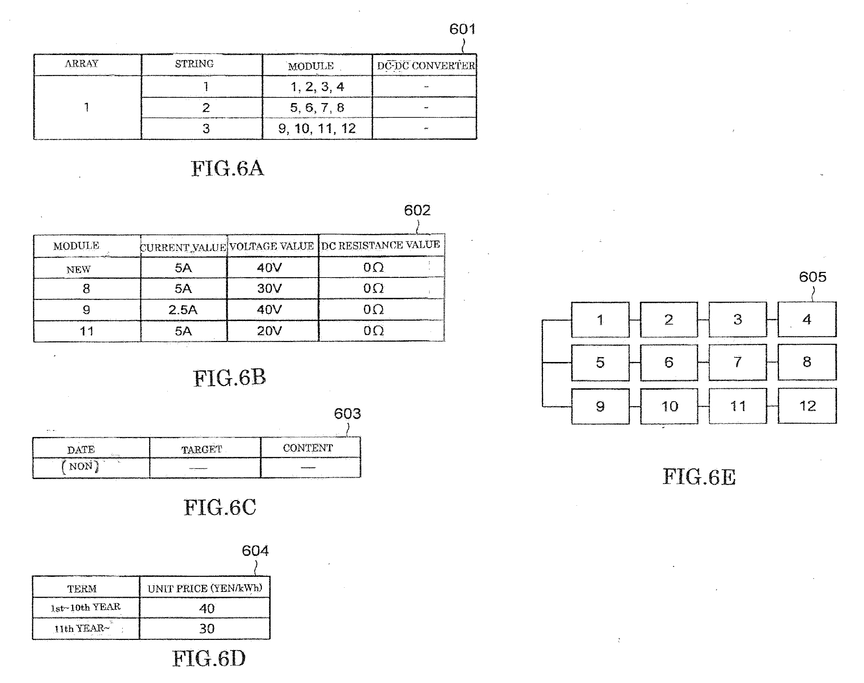

Figs.6A~6E show examples of data stored in the PV facility DB 201. In Fig.6A, connection status data 601 represents a connection relationship by an array ID, a string ID, and a module ID. The connection relationship of the connection status data 601 is shown as 605 in Fig.6E. As shown in Fig.6E, this system is three parallel-four serial. Moreover, hereinafter, a system of N parallel-P serial is called NP-MS, or NP×MS. In order to estimate how module-fault affects on all array, the connection status data is necessary.

In Fig.6B, power generation performance data 602 is parameters representing the present power generation performance of the PV system. In the power generation performance data 602, items such as a module number, a current value, a voltage value and a DC (direct current) resistance value, are shown. At a first line of these data 602, a performance of a new module (new article) having no degradation is shown. Here, the current value is 5A (ampere) and the voltage value is 40V (Volt). Briefly, a performance of a normal module is represented by these values. At a second line ~ a fourth line of these data 602, three modules 8, 9 and 11 have fault, and registered in this list. Here, two modules 8 and 11 have voltage-fault, and one module 9 has current-fault. In each module, the voltage value and the current value are below a predetermined value. Moreover, modules except for these three modules are regarded to have the same performance as that of normal time.

If the apparatus 100 has a history such as replacement of module, this history is stored in maintenance history data 603. In Fig.6, non-history is stored. If such instance is included, the history is reflected on a facility fault simulation (explained afterwards).

In order to compare an electric unit (power generation amount) with a money unit (cost), electric power selling price data is necessary. In Fig.6D, electric power selling price data 604 represents a table of electric power selling prices which are different for each term.

A performance of the PV system is represented by a graph of "current vs. voltage" called IV characteristic. This performance satisfies a constraint condition that relationship between output current and output voltage is represented as points on IV characteristic graph. Furthermore, when IV characteristic of the PV modules are supplied, IV characteristic of the PV string by connecting PV modules in serial is almost represented by a shape that IV characteristics of the PV modules are added along voltage direction. Furthermore, when IV characteristic of the PV strings are supplied, IV characteristic of the PV array by connecting PV strings in parallel is almost represented by a shape that IV characteristics of the PV strings are added along current direction.

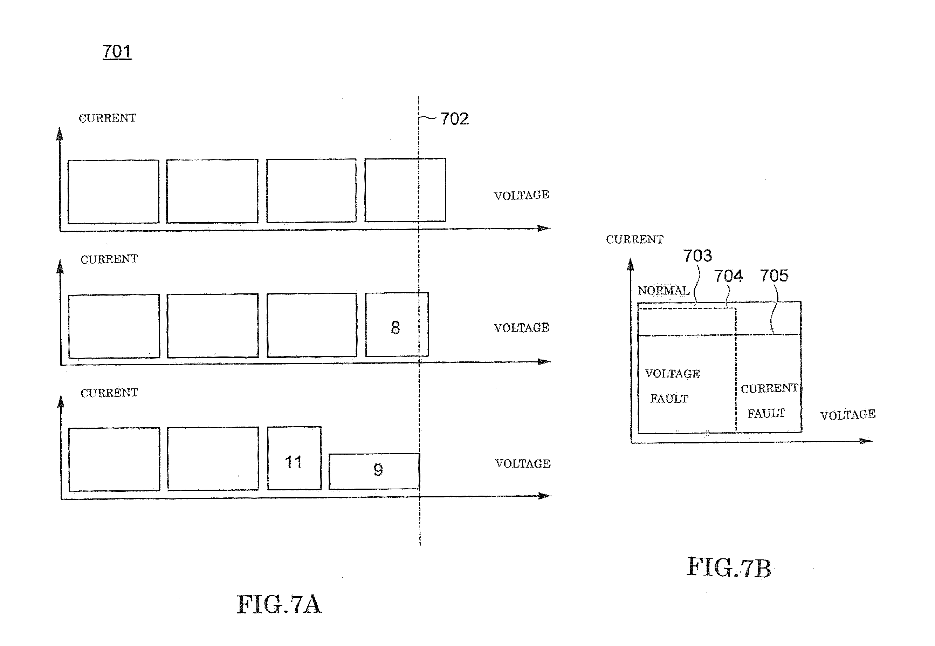

Figs.7A and 7B are schematic diagrams simply showing IV characteristic. Here, the PV system has connection status data 601 (Fig.6A), component 605 (Fig.6E), and power generation performance 602 (Fig.6B). This case is shown in Figs.7A and 7B. In Fig.7B, IV characteristic of a normal module is a square 703, IV characteristic of a voltage-fault module is a square 704 having a shorter side along X-axis direction, and IV characteristic of a current-fault module is a square 705 having a shorter side along Y-axis direction. Here, actual IV characteristic is not a square shown in Fig.7B. However, in order to simplify the examination, the IV characteristic is approximately represented.

In Fig.7A, three X-Y axes represent IV characteristic corresponding to each string of the component 605. Here, a string 2 includes a voltage-fault module 8, and a string 3 includes a voltage-fault module 11 and a current-fault module 9. Based on IV characteristic of these PV arrays, an operation voltage (MPPT voltage) as a maximum is determined. In example of Fig.7A, MPPT voltage is 140V. Because the string 3 cannot generate a voltage over 140V (=40+40+20+40). In this case, a current generated from two strings 1 and 2 is 5.0A, and a current generated from one string 3 is 2.5A. Accordingly, the power generation amount is calculated as follows.

$$140[V]*(5.0+5.0+2.5)[A] = 1.75kW.$$

Here, in order to output 140V, the string 3 cannot output a current over 2.5A, and this feature should be noticed. The string is a serial circuit of modules. When the string operates with some voltage value, the string has a characteristic to be restricted by IV characteristic of a module having the lowest output current. Furthermore, the array is a parallel circuit of strings. When the array outputs some current value, the array has a constraint to lower the operation voltage by matching with a string having the lowest output voltage. Because of these two kinds of the minimum characteristic, determination of maintenance strategy is very difficult.

For example, if a voltage-fault module having the lowest output voltage is replaced with a new module, an operation voltage of all arrays is expected to be higher. However, in a system of which parallel level is very large, voltage-fault may newly occur in another string. As a result, the operation voltage may lower. In such case, replacement with the new module may be unnecessary. By considering effect of failure in the future, determining whether to replace or not is very difficult decision-making problem.

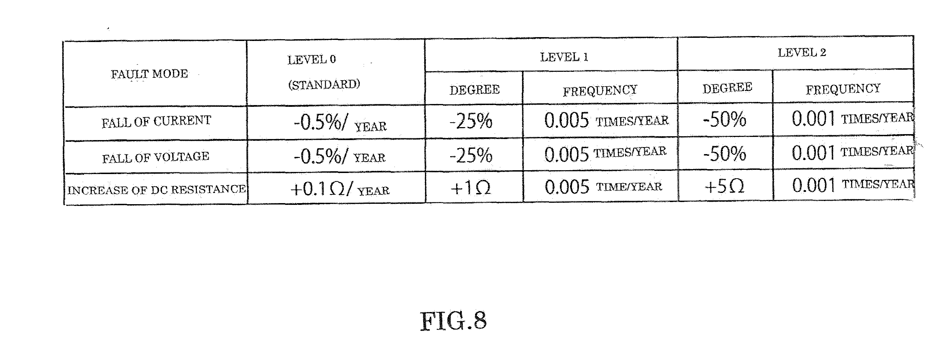

The fault model DB 202 stores fault models each representing a probability of fault in the future. Fig.8 shows an example of the fault model DB 202. In Fig.8, three fault modes related to PV module-fault such as fall of current, fall of voltage, and increase of DC resistance, are shown, and a fault level and occurrence frequency are also shown for each level. These fault models may be acquired from a maintenance history, or numerical values disclosed in examination data of acceleration degradation (by a maker) or known references may be used. In Fig.8, level 0 represents a standard aging degradation, and levels 1 and 2 represent two fault degradations of which degrees are different.

By using a fault model, a virtual fault can be occurred in a virtual PV system having arbitrary degradation state. The fault affects on IV characteristic of the PV system, and makes MPPV voltage change (vary). As a result, by changing the output current and the output voltage, the power generation amount is changed (varied). In this way, the PV system has a characteristic that the reaction for degradation is easy to be estimated. The apparatus 100 has a function to detect a fault, when the current, the voltage, or the resistance of the module degraded by the fault model, is respectively lower or higher than a predetermined value. Furthermore, the apparatus 100 has a function to detect a fault, when a current value from the string or an output value from the system is lower than a predetermined value.

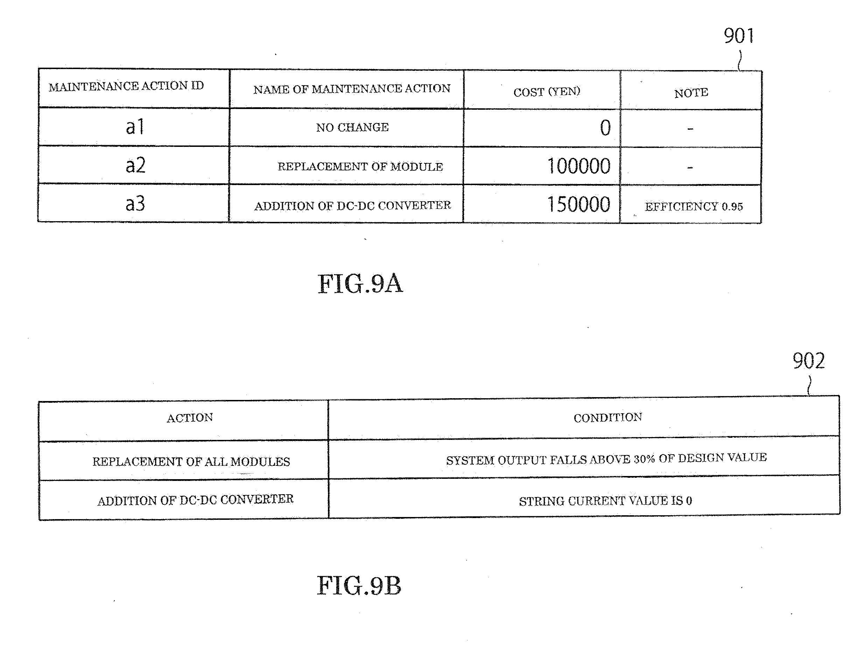

When fault degradation occurs at a module of the PV system, recover of the power generation amount is expected by a maintenance action. The maintenance strategy DB 203 stores information of maintenance actions. Figs. 9A and 9B show examples of the maintenance strategy DB 203. In Fig.9A, 901 is a table to store information of a list of maintenance actions. In the table 901, three maintenance actions, a cost thereof, and a parameter related to effect thereof, are stored.

In the table 901, a maintenance action a1 represents a selection item that the present status is maintained, i.e., no action is performed. The cost of this action is the lowest.

A maintenance action a2 represents a selection item that some PV module is replaced with a new module. The new module may be regarded not to be degraded. Here, as to replacement of each module, equal cost is assigned. However, the cost may be different for a module to be replaced.

Furthermore, a maintenance action a3 represents a selection item that DC- DC converter is added to some string. The DC- DC converter changes a voltage of each string by DC- DC conversion. Here, the power can be generated by matching with an operation power of the PV array connected in parallel. Briefly, if the DC- DC converter is added to one string in the PV array of NP- MS, this PV array is separated to two sub systems, i.e., PV array of (N- 1) P- MS and PV string of 1P- MS. Each sub system can operate at an optimum MPPT voltage. However, a power generation amount of the string to which the DC- DC converter is added is affected by a loss due to the DC- DC conversion. As shown in Fig. 9A, power generation efficiency is reduced to a product (multiplication result) of the power generation amount and 0.95 (equivalent to 5% loss) . Here, as to addition of the DC- DC converter, a fixed cost is assigned. However, the cost may change for the string to which the DC- DC converter is added.

In the present embodiment, a selection item to remove the DC-DC converter is not included in the maintenance action. Accordingly, if the DC-DC converter is added to a string once, this string is continually separated from all the system. However, in the string to which the DC-DC converter is added, replacement of PV module can be a candidate of the maintenance action.

The maintenance strategy DB 203 stores a maintenance reference which is called a reference maintenance strategy rule. This is a rule to determine which maintenance action is immediately selected from a degradation state of the system, and may not be the optimum one. In order to acquire an optimum solution in an optimum maintenance plan (explained hereinafter), a plurality of maintenance actions are compared and evaluated. Accordingly, calculation time to acquire the optimum solution is necessary. When a facility fault simulation is performed, by determining a maintenance action according to a predetermined maintenance standard, the simulation can be quickly performed. In Fig.9B, a table 902 shows an example of the reference maintenance strategy rule. Here, the maintenance reference is determined by two rules. In addition to this, a maintenance strategy "maintenance action a1 is always performed" (no action) can be included in the reference maintenance strategy rule.

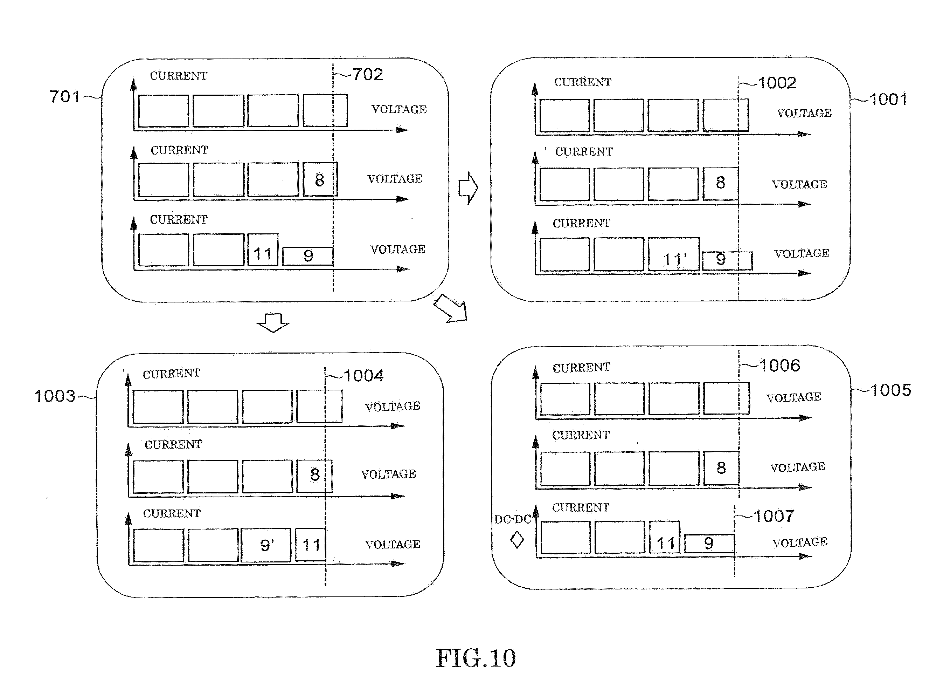

As mentioned-above, IV characteristic of degradation status of PV facility data in Figs.6A and 6B is imitatively shown as 701 in Fig.7A. Here, when the maintenance action in Figs.9A and 9B is executed, how IV characteristic of the PV system has changed is imitatively shown in Fig.10. In Fig.10, a graph 701 shows degradation status before executing the maintenance action. Furthermore, when "maintenance action a1 = no change" is selected, the degradation status is continuously same as the graph 701.

Here, when a maintenance action "replacement of PV module 11" is selected, IV characteristic is changed to a graph 1001 in Fig. 10. In the graph 1001, new PV module replaced is represented as 11'. Furthermore, by this replacement, it is confirmed that MPPT voltage 702 has increased to 1002. As a result, a power generation amount of the system increases. Because change of IV characteristic and MPPT voltage from 701 to 1001 can be considered as that state of the system has transited by the maintenance action.

In Fig.10, a graph 1003 represents a state transition when a maintenance action "replacement of PV module 9" is executed, and a graph 1005 represents a state transition when a maintenance action "addition of DC-DC converter to PV string 3" is executed. Here, in the graph 1005, by addition of the DC-DC converter, it is understood that PV string 3 and other arrays respectively operate at different MPPT voltage.

In addition to this, a maintenance action "replacement of PV module 8 included in fault modules" and a maintenance action "addition of DC-DC converter to string 1 or string 2" may be considered. However, increase of power generation amount does not occur by these maintenance actions. Accordingly, in the present embodiment, these maintenance actions are not used. In this way, targets of maintenance action are not applied to all PV modules. Previous filtering of the targets is important for search of effective action.

Assume that a system having degradation status is under some state and this state is transited by a maintenance action or fault-occurrence. Here, fault of a device (in the system) and the maintenance action are represented by a state transition model. Furthermore, if the maintenance action to maximum an averaged sum of reward (acquired from some state) is defined as an optimum maintenance action, this action can be determined by using theory of dynamic programming. According to a formula of dynamic programming, when a state at a time t (or timing, hereinafter, it is unified as timing) is g(t), this state is transited to $g^{ak}(t)$ by an element $a_k$ of candidate list $\{a_k\}$ of action. Here, a value of action $a_k$ is defined as follows.

$$Q^{\pi}(g(t),a_k) = -Cost(a_k) + V^{\pi}(g^{ak}(t)) \qquad (1)$$

From above equation (1), it is understood that action having the largest action value (Q value) had better be selected. Here, Cost(a) is a cost to execute action a. Calculation of action value should be executed at each timing t for all candidates of action. In the equation (1), a state g is a start state, and $V^{\pi}(g)$ is a sum of expected reward according to maintenance strategy $\pi$. If $V^{\pi}(g)$ is correctly estimated, by continually selecting an optimum solution at each timing, it is guaranteed that the optimum action can be selected in a long term.

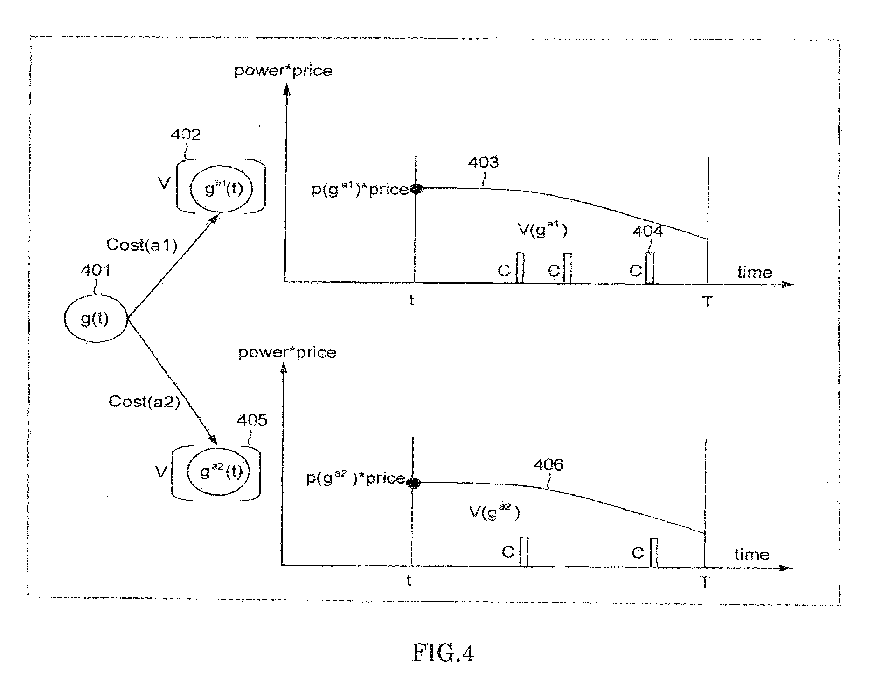

Fig.4 shows an example to represent a maintenance problem of the PV system as a frame of dynamic programming. At a timing t, if two actions a1 and a2 are selection items in a state g(t), an optimum action is selected from a value $V(g^a(t))$ of a next state and an execution cost Cost(a) of action. Here, in the maintenance problem of the PV system, a value of state g is considered as that a maintenance cost necessary to maintain a power generation amount (from the present timing to some timing) is subtracted from a multiplied result of the power generation amount with an electric power selling price. Briefly, following equation is defined.

$$V^{\pi}(g) = E\left[ \int_{t}^{t+T} p(g(\tau)\,|\,g(t)=g,\pi)*price(\tau) - cost(\pi\,|\,g(t)=g)d\tau \right] \qquad (2)$$

In the equation (2), p(g) is a function representing a power generation amount in a state g. In Fig.4, in a state $g^{a1}$, a graph 403 of {(power generation amount) $\times$ (electric power selling price)}. Furthermore, as shown in 404, a cost C occurred for maintenance is represented. Here, by subtracting an area of C from an area of a polygon surrounded by 403 in Fig.4, this subtracted area is equivalent to an amount of the value $V(g^{a1})$ of the state $g^{a1}$. In this way, the value of the PV system is approximately determined by time change of the power generation amount. By using this characteristic, if the state value V(g) is correctly estimated, the optimum maintenance action can be selected.

Here, following calculation is necessary. Briefly, in an arbitrary state g, according to the optimum maintenance strategy $\pi$, the state value $v^{\pi}(g)$ is effectively and most correctly estimated.

In the apparatus 100 of Fig.2, as to an arbitrary state g and an arbitrary maintenance strategy $\pi$, the facility fault simulator 101 can imitate a transition of degradation and maintenance of the system until an indicated timing T. According to fault models stored in the fault model DB 202, the simulation can be performed with occurrence of fault by a random number. Then, the simulation result is stored in the simulation result DB 102. In the present embodiment, by using this simulation, in order to effectively and correctly estimate the state value $v^{\pi}(g)$, two simulation results, i.e. , a long term simulation and a short term simulation, are used.

In Fig.2, by using the facility fault simulator 101, in case of performing maintenance based on above-mentioned reference strategy (Refer to 902 in Fig.9B), the reference strategy long term simulation unit 103 simulates transition of gradation and maintenance of the system for all term of life cycle of the system. In the reference strategy, by performing the maintenance according to rule 902, the maintenance action can be determined without optimum searching from the system state. Assume that a state having no fault is go as a start state. As to a target system and all sub systems able to be generated by maintenance (i.e., each sub system by dividing the target system into a plurality of sub systems by maintenance), in case of performing maintenance based on the reference strategy, transition of degradation and maintenance of the system is simulated. Then, a curved line of power generation amount (output transition data) and a curved line of maintenance cost (maintenance cost transition data) are calculated. The degradation of the system is occurred by the fault model.

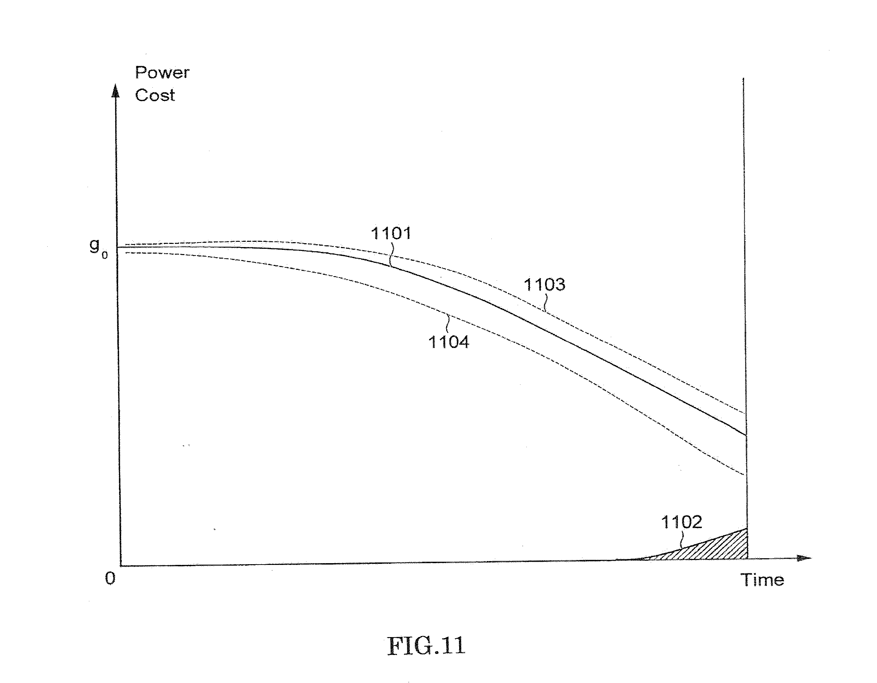

Fig.11 shows one example of a reference strategy long term simulation. In Fig.11, a new article state go of the facility is a start state, and the state g is continually transited by simulating degradation and maintenance. Then, based on MPPT voltage and output current determined by the state g, a power generation amount p(g(t)) is calculated. This simulation is executed the plural times by using random number, and an average and a reliance segment are calculated. In Fig.11, transition of the average of the power generation amount is 1101, transition of 95% of points larger than the average is 1103, and transition of 95% of points smaller than the average is 1104. Furthermore, according to the reference strategy (902 in Fig.9B), an average 1102 of the maintenance cost is calculated. Here, 1101 is called a curved line of the power generation amount, and 1102 is called a curved line of the maintenance cost.

According to the reference strategy, by the long term simulation, transition of averaged power generation amount and transition of maintenance cost are acquired. As to the reference strategy, search of the optimum action based on the system state is not performed. In the same way as 902 in Fig.9B, the maintenance action should be uniformly determined. Because, if search of the optimum action is repeated at each timing, time is explosively necessary for the simulation. Accordingly, in the long term simulation, by using maintenance strategy (902 in Fig.9B) without search of optimum action, the curved line of power generation amount and the curved line of maintenance cost are quickly calculated. Moreover, a completion timing T (predetermined timing) of the long term simulation may be longer (For example, thirty years) by considering a life cycle of the system.

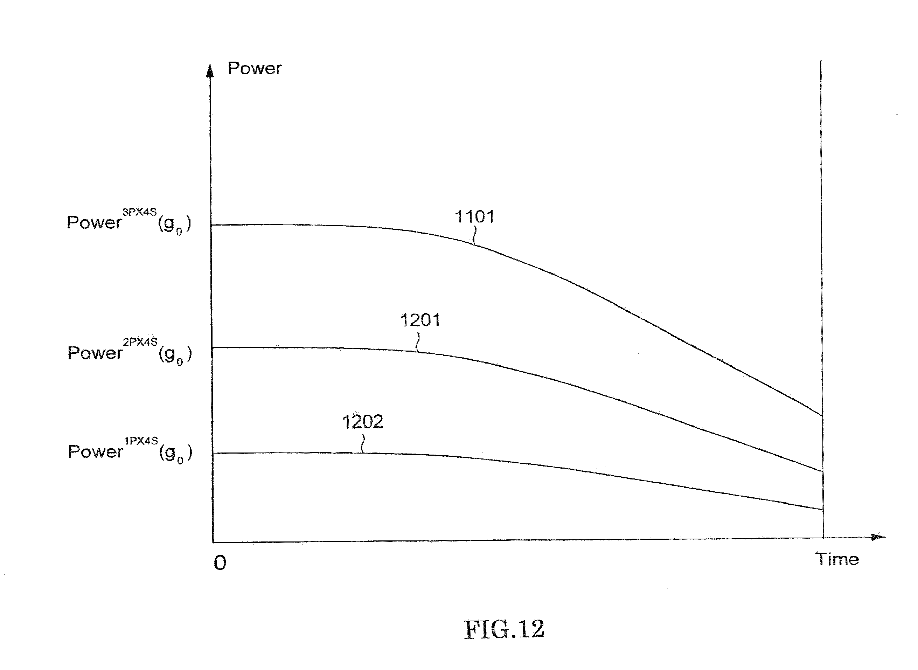

As mentioned-above, Fig.11 is a long term simulation result in 3P-4S system. Here, for example, if addition of DC-DC converter is included in the maintenance action, as to all sub systems able to be generated by maintenance, the curved line of power generation amount and the curved line of maintenance cost should be calculated. Fig.12 is an example of the curved line of power generation amount in the system including all sub systems. In Fig.12, 1101 is a curved line of power generation amount of 3P-4S system, 1201 is a curved line of power generation amount of 2P-4S system, and 1202 is a curved line of power generation amount of 1P-4S system. These simulation results are stored in the simulation result DB 102. Furthermore, in the same way, the curved line of maintenance cost should be processed. In Fig.12, the curved line of maintenance cost is omitted.

In Fig.2, by using the facility fault simulator 101, the present state of the system is transited by a plurality of maintenance actions (candidates thereof) respectively, and each transited state is set to a start state. In a term from the present timing t (first timing) to a timing s (second timing) when a predetermined time $\Delta T$ has passed from the present timing t, in case of performing maintenance based on the optimum strategy, the optimum strategy short term simulation unit 104 simulates transition of degradation and maintenance of the system. Briefly, in order to estimate a difference between the power generation amount and the maintenance cost due to a difference between the reference strategy and the optimum maintenance strategy, only in a short term, simulation including search of the optimum action is performed. Then, by using this simulation result, the state value can be effectively and correctly estimated. The maintenance actions (as candidates thereof) may be automatically determined based on contents of system fault (fault of PV module, PV string or system output). Alternatively, a user may determine the maintenance actions based on the present state of the system. However, candidates of the maintenance action to be found during execution of simulation (explained afterwards) are automatically determined. For example, by preparing correspondence data between fault contents and the maintenance action, candidates may be determined based on the correspondence data. In this case, even if a maintenance action is performed, if improvement of the system output does not rise above a predetermined percent, this maintenance action may be deleted from candidates. Furthermore, by determining an upper limit for the number of candidates, if a large number of candidates (maintenance actions) exists, candidates corresponding to fault contents having higher fault level (deviation degree from normal state is higher) may be selected as the upper limit for the number thereof. Alternatively, candidates by which improvement of the system output is larger may be selected as the upper limit for the number thereof.

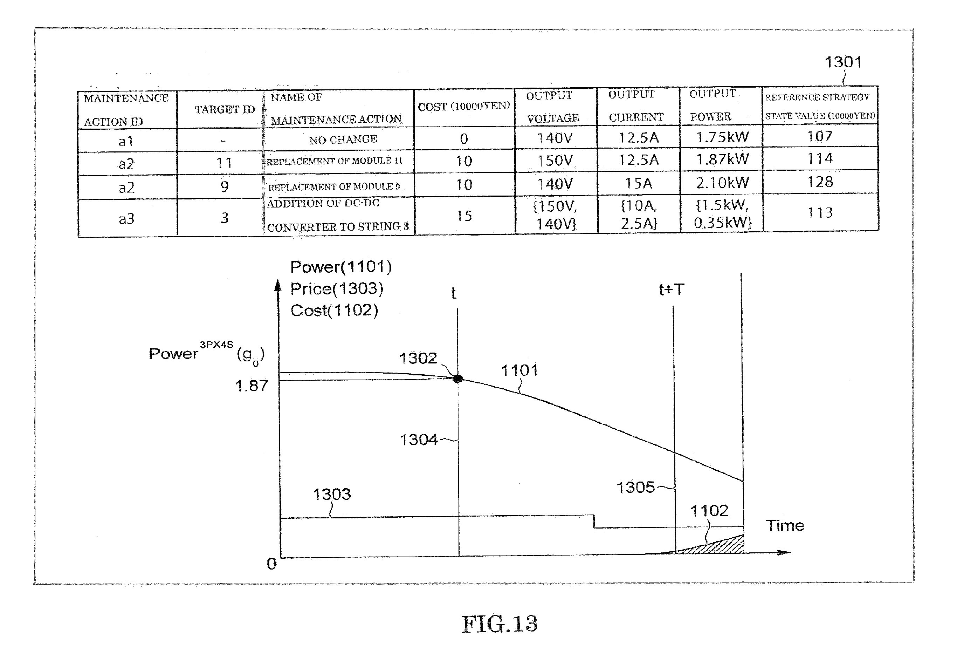

As a first example (optimum strategy short term simulation), in a search segment from the present timing t to a timing s (=t+$\Delta T$) when a predetermined time $\Delta T$ has passed from the present timing t, the optimum action is searched at each search timing (at a predetermined interval). For example, if $\Delta T$ is four weeks and the predetermined interval is one week, the optimum action is searched at a timing of a first week, a second week, a third week, and a fourth week from the present timing t. During this period, degradation of the system is occurred by the fault model. Concretely, based on combination of maintenance actions at each search timing, from the present timing t to a predetermined timing T (such as a completion timing of life cycle of the system), a curved line of power generation amount and a curved line of maintenance cost are calculated. From the timing s to the predetermined timing T, above-mentioned long term simulation result is used according to the reference strategy (the usage method is referred to explanation of Figs.13, 17, 18 and 19). Alternatively, by setting the timing s to start timing, new simulation of reference strategy may be executed. In case of the long term simulation (former case), a calculation time can be reduced. In case of the reference strategy simulation (latter case), a long calculation time is taken, but correct simulation can be performed. After this, the value is calculated according to the equation (2), and a combination of maintenance actions having the highest value is determined as the optimum action at respective search timings. Above-mentioned processing is performed from a start state. Here, the present state of the system is transited by a plurality of maintenance actions (candidates) respectively, and each transited state is set to the start state.

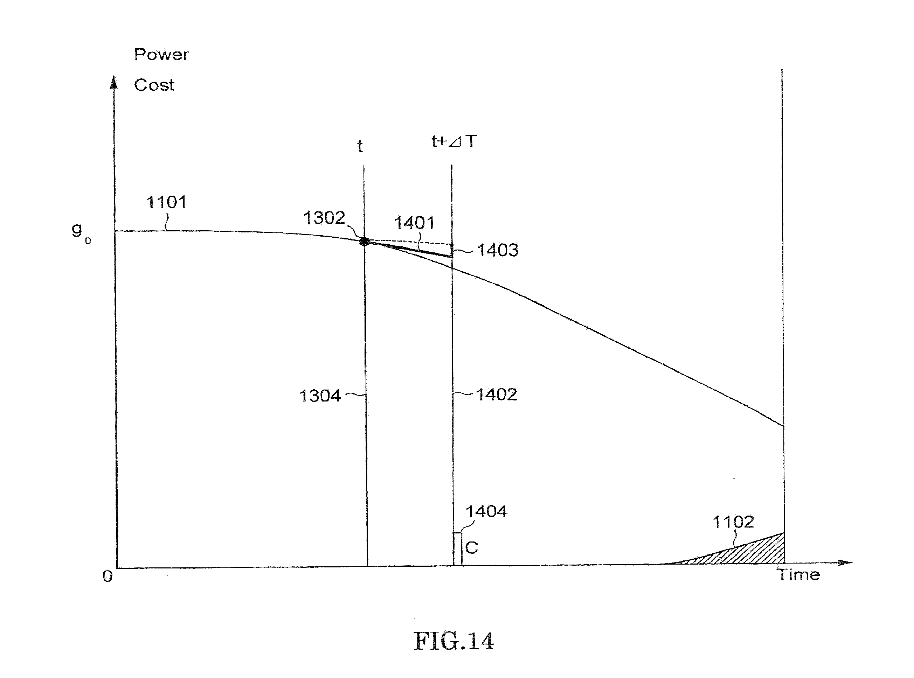

As a second example (optimum strategy short term simulation), from each start state at the present timing t, in case of performing the maintenance according to the strategy maintenance, transition of degradation and maintenance of the system are simulated until a timing s (=t+$\Delta T$). Only at the timing s (=t+$\Delta T$), an optimum strategy is executed (an optimum maintenance action is searched). In this method, the optimum action is searched at the timing s only. Until the timing s, the simulation is executed according to the reference strategy. Accordingly, in comparison with the first simulation, i.e., the case that the optimum action is searched at a plurality of search points, the calculation amount can be reduced. Fig.14 shows an example of the second simulation (the optimum strategy short term simulation).

In Fig.14, the optimum strategy short term simulation starts from some next state at timing t. A curved line 1401 represents a simulation result (power generation amount) by simulating degradation and maintenance (by the reference strategy) from a state 1302 (as a start state). A time range of this simulation is "t ~ t+ΔT". The curved line 1401 of power generation amount is an average of a plurality of reference strategy simulation results (this simulation is executed plural times). Moreover, as mentioned-above, a curved line 1101 represents a long term simulation result starting from a state of new article. In this simulation result of the reference strategy simulation, the number of times of maintenance is "0". Accordingly, a curved line of maintenance cost is not displayed in a range "t ~ t+ΔT". By executing simulation according to the reference strategy, the simulation can be quickly performed.

In Fig.14, when the optimum action is executed at t+ΔT, a power generation performance rises as shown in 1403, and a maintenance cost is charged as shown in 1404. If the optimum maintenance is imaged to be executed, values of the curved line of power generation amount and the curved line of maintenance cost are larger. More, as mentioned-above, a line 1102 represents a maintenance cost when a long term simulation is executed from a state of new article. Furthermore, in Fig.14, a dotted line represents an approximated curved line connecting a power generation amount at the present timing t and a power generation amount after executing the optimum maintenance at t+ΔT. If not the reference strategy but the optimum maintenance strategy is executed in ΔT, a power generation amount of the approximated curved line is expected, and the cost is approximated by a cost line 1404.

As to a short term simulation result based on the optimum strategy, this result is stored in the simulation result DB 102. Briefly, in the simulation result DB 102, a long term simulation result based on the reference strategy, and a short term simulation result based on the optimum strategy, are stored.

In the reference strategy state value calculation unit 105 of Fig.2, based on the reference strategy long term simulation result (the curved line of power generation amount, the curved line of maintenance cost) stored in the simulation result DB 102 and the electric power selling price data stored in the PV facility DB 201, as to each state transited from the present system state by a plurality of maintenance actions (candidates) respectively, a reference strategy state value thereof is calculated. After from the present timing, the reference strategy state value is calculated based on a power generation performance (acquired in case of executing a maintenance based on the reference strategy) and a cost for the maintenance. As the calculation method, for example, based on a power generation performance value of a next state (start state), gradation level of the curved line of power generation amount is specified. The curved line of power generation amount is multiplied with the electric power selling price, and a value of the curved line of maintenance cost is subtracted from the product. Last, by integrating the subtraction result, the reference strategy state value is acquired.

Fig.13 shows an example of calculation of the reference strategy state value. In a table 1301, as to four candidates of maintenance action, an output voltage and an output current (after executing the maintenance action), and an output power (product of the output voltage and the output current), are shown. For example, at a maintenance action a2, as an execution result of maintenance action "replacement of module 11", the output power is 1.87 kW. Here, as a value acquired (by the system) from the present timing t to a timing (t+T) after T hours from the present timing t, curved lines 1101 and 1303 are multiplied, a curved line 1102 is subtracted from the product, and the subtraction result is integrated between two timings 1304 and 1305. Briefly, the value can be estimated by following equation.

$$V(a2,11) = \int_{t}^{t+T} price(\tau) * Power^{3P \times 4S}(g_0,\tau) - Cost(\tau)d\tau = 1140000 \qquad (2)$$

In the equation (2), V (a2, 11) is a reference strategy state value after a panel 11 is replaced (a2), Price () is a curved line of electric power selling price corresponding to the curved line 1303, Cost () is a cost curved line corresponding to the curved line 1102, and Power$^{3P \times 4S}$ () is a curved line of power generation amount corresponding to the curved line 1101. The value of V (a2, 11) is calculated as 1140000 yen.

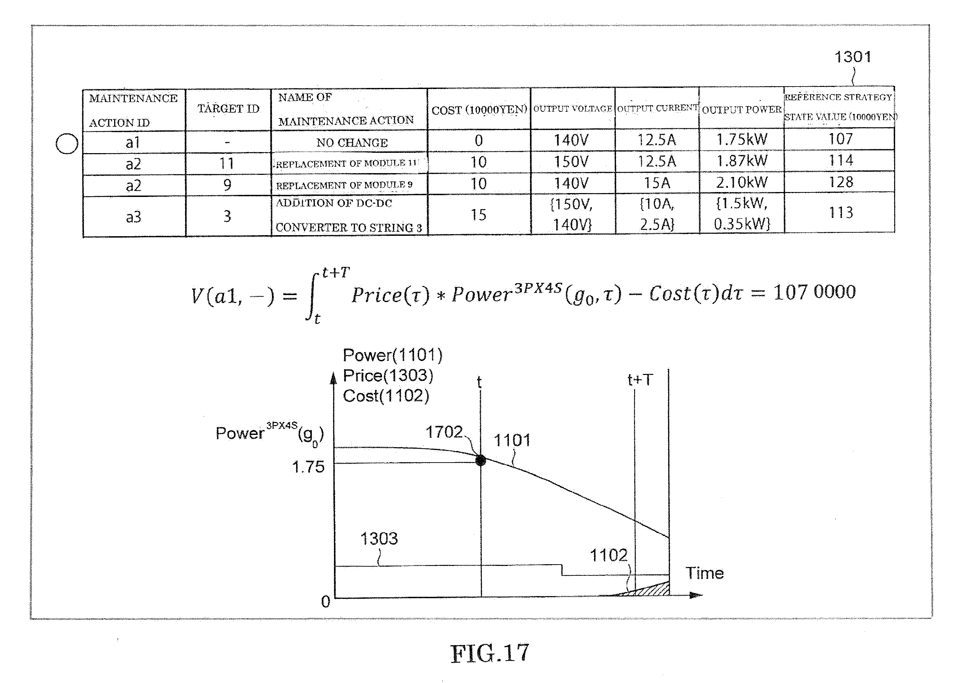

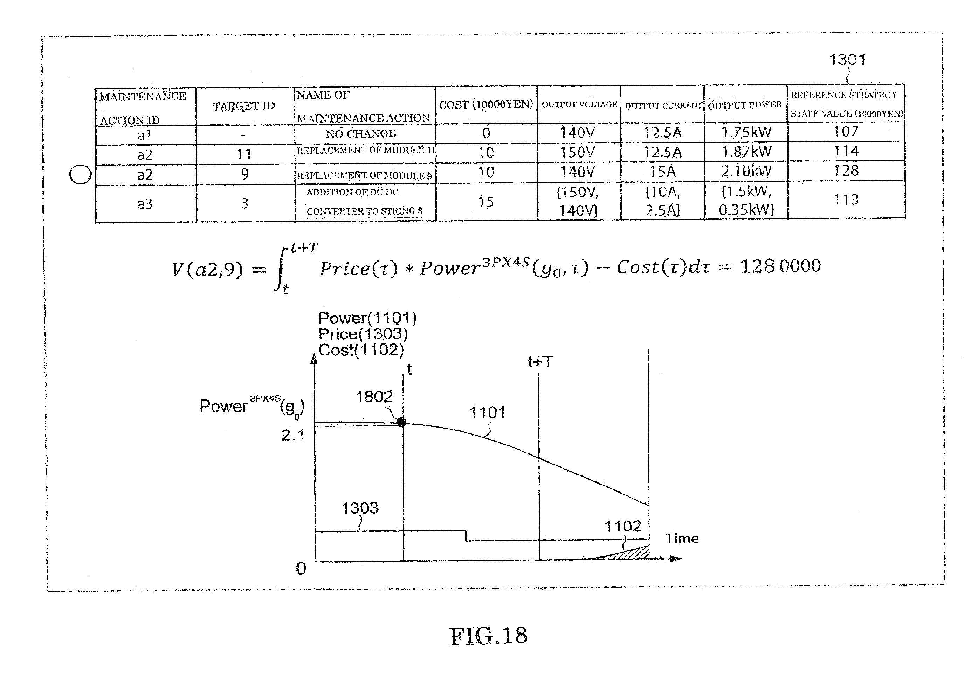

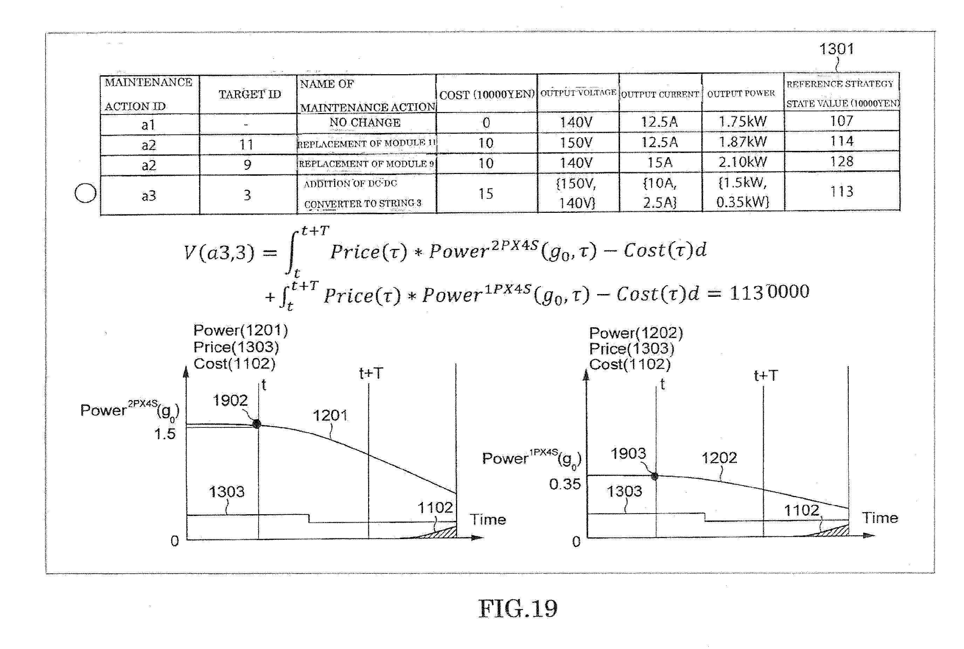

Furthermore, in Fig. 13, when maintenance action except for (a2, 11) is selected, an example of calculation of the reference strategy state value is shown in Figs. 17, 18 and 19. Fig. 17 shows an example of calculation of the reference strategy state value when (a1, -) in Fig. 13 is selected. Fig. 18 shows an example of calculation of the reference strategy state value when (a2, 9) in Fig. 13 is selected. Fig. 19 shows an example of calculation of the reference strategy state value when (a3, 3) in Fig. 13 is selected. The reference strategy value based on these maintenance actions is respectively calculated as shown in a table 1301 of Figs. 17~19.

Moreover, as shown in a maintenance action a3 in the table 1301 of Fig. 13, if DC- DC converter is added to a string 3, the system 3P- 4S is divided into 2P- 4S and 1P- 4S. In this case, in Fig. 12, curved lines 1201 and 1202 of power generation amount are used.

After from the present timing, if a maintenance action is executed according to the long term simulation reference strategy, the reference strategy state value is an average of a sum of rewards acquired from the power generation. However, fall tendency of the power generation amount may be different by respective states. In addition to this, if the optimum strategy is selected, the value thereby may be different. Accordingly, in order to correct a difference between these values, a short term simulation result is utilized.

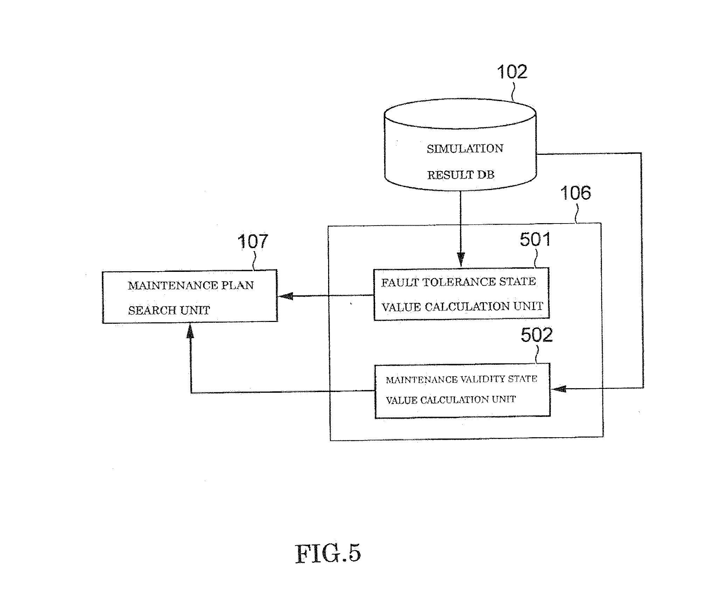

In the optimum strategy state value calculation unit 106 of Fig.2, based on a reference strategy long term simulation result and an optimum strategy short term simulation result (stored in the simulation result DB 102), a fault tolerance state value and a maintenance validity state value are calculated. Fig.5 is a block diagram of component of the optimum strategy state value calculation unit 106 in Fig.2. As shown in Fig.5, the optimum strategy state value calculation unit 106 includes a fault tolerance state value calculation unit 501 and a maintenance validity state value calculation unit 502.

In the fault tolerance state value calculation unit 501, at the present timing t, based on a power generation performance of the state at a timing s(=t+$\Delta$T) before executing the optimum maintenance action, what level a fault at the next state makes the power generation performance fall is calculated as the fault tolerance state value. For example, in Fig.14, as to a curved line 1401 of power generation amount under the reference strategy at a state 1302, degradation degree is lower than that of averaged curved line 1101 of power generation amount (start state is go). Accordingly, if this tendency continues to a timing T (completion timing of life cycle of the system), simply, as to a power generation amount of an area surrounded by a curved lines 1101 and 1401, and a straight line 1402, this power generation amount is expected to increase as (T-t)/$\Delta$T times thereof. By this estimation, a fault tolerance of the present state for an averaged state (a next state transited by the long term simulation) can be evaluated. If 3P $\times$ 4S is imagined by considering the cost, the fault tolerance state value ($\Delta$V) is calculated by following equation.

$$\alpha = \int^{+\Delta T} \Pr ice(\tau) * \left\{ Sim\_Power(\tau) - Power^{3PX4S}(g_o, \tau) \right\} - \left\{ Sim\_Cost(\tau) - Cost(\tau) \right\} d\tau$$

$$\Delta V = \alpha * (T\text{-}t) / \Delta T \tag{3}$$

In the equation (3), Sim_Power(t) is a power generation amount by the reference strategy simulation executed in $\Delta$T, Sim_Cost(t) is a maintenance cost by the reference strategy simulation executed in $\Delta$T, Cost($\pi$) is a maintenance cost by the long term simulation, and $\alpha$ corresponds to a first value.

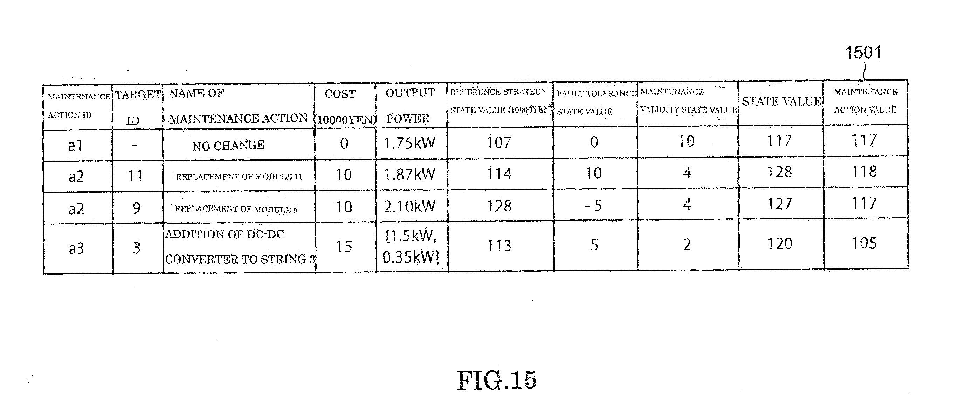

Fig.15 shows an example of calculation of an optimum strategy state value (= fault tolerance state value + maintenance validity state value), a state value, and a maintenance action value. The fault tolerance state value (estimated) is shown at the seventh item in a table 1501 of Fig.15. Moreover, the optimum strategy state value is addition of the fault tolerance state value and the maintenance validity state value.

In the maintenance validity state value calculation unit 502, in a state (acquired by the simulation) at a timing s (=t+ $\Delta$T), based on a difference of power generation performance between before and after executing the optimum maintenance action, a difference of state value between in case of the reference strategy and in case of the optimum strategy is calculated as a maintenance validity state value.

For example, in Fig.14, in comparison with a curved line 1401 of power generation amount under the reference strategy at a state 1302, by selecting the optimum maintenance action, increase 1403 (represented as X) of power generation amount is realized with increase 1404 of maintenance cost. Then, by approximation, this tendency is considered to continue until a timing T, and increase of power generation amount is expected. By this estimation, a difference between a value by the reference strategy and a value by the optimum strategy can be calculated as the maintenance validity state value. By adding the cost, the maintenance validity state value ($\Delta$V) is approximately calculated as following equation. Moreover, following approximation is one example. Another method may be used.

$$2.0 * \beta = \Pr ice(t + \Delta T)(Opt\_Power(t + \Delta T) - Sim\_Power(t + \Delta T)) - Opt\_Cost(t + \Delta T)$$

$$\Delta V = \beta * (T\text{-}t) / \Delta T \tag{4}$$

In the equation (4), Opt_ Power (s) is a power generation performance value after selecting the optimum action (based on the simulation result) at a timing s, and Opt_ Cost (s) is a cost of the optimum action. Intuitively, by an area surrounded by 1401, 1403 and a dotted line, increase of power generation amount in $\Delta$T is approximated. If a cost by the reference strategy is charged in $\Delta$T, this cost had better included in the equation (4) . Here, assume that $\beta$/ $\Delta$T continues for a long term (T) . Moreover, as to Price (t+$\Delta$T), even if a price has changed in $\Delta$ T, this price is approximated by using a price at the timing (t+ ΔT). However, if variation of the price is large, an average of the price from t to (t+ΔT) may be used. Furthermore, β corresponds to a second value.

In a table 1501 of Fig.15, at the eighth item, the maintenance validity state value (estimated) is shown.

In the dynamic programming maintenance plan search unit 107 of Fig.2, at the present timing t, by adding the reference strategy state value (calculated for all candidates of maintenance action) to the optimum strategy state value (= the fault tolerance state value + the maintenance validity state value), a state value of each candidate is calculated (the ninth item in table 1501 of Fig.15). Then, by subtracting a maintenance cost (charged for maintenance action to execute at the present timing t) from the state value, a maintenance action value is calculated. The dynamic programming maintenance plan search unit 107 selects a maintenance action having the maximum maintenance action value, and outputs it as the facility maintenance plan 204. In the table 1501 of Fig.15, at the tenth item, the maintenance action value is shown. In an example of Fig.15, the maintenance action value of the maintenance action (a2,11) is the largest one (118). Accordingly, this maintenance action "replacement of module 11" is selected.

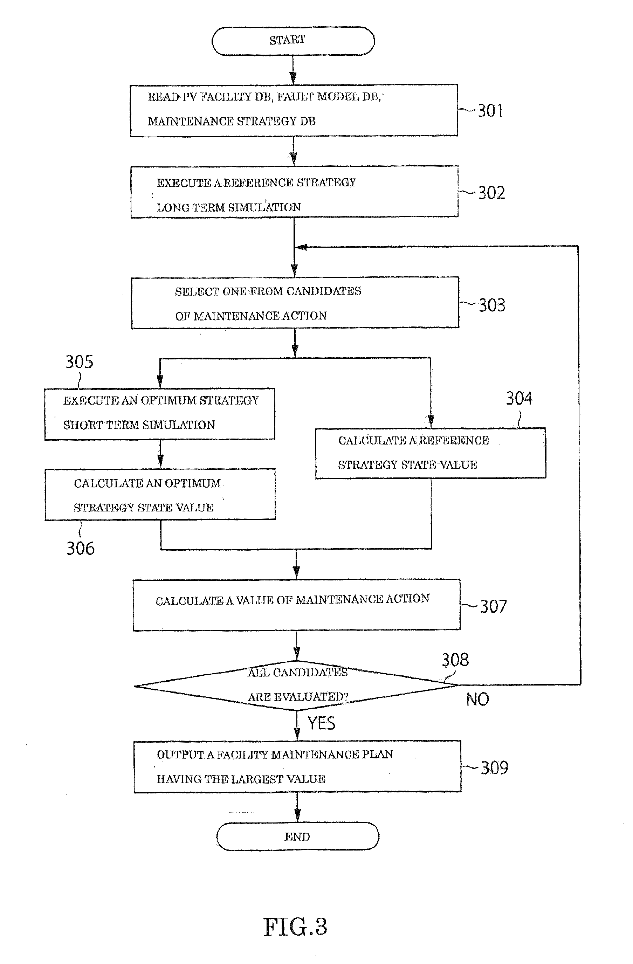

Fig.3 is a flow chart of processing of the apparatus for determining the optimum maintenance plan according to the present embodiment. When a process to determine the optimum maintenance plan starts, data stored in the PV facility DB 201, the fault model DB 202 and the maintenance strategy DB 203, are read into a memory (S301). Then, the reference strategy long term simulation is executed (S302). After that, one maintenance action is selected from candidates of maintenance action (S303). As to the maintenance action selected, the reference strategy state value is calculated (S304). Furthermore, after executing the optimum strategy short term simulation (S305), the optimum strategy state value (= the fault tolerance state value + the maintenance validity state value) is calculated (S306). By subtracting the maintenance cost from the sum of the reference strategy state value and the optimum strategy state value, the maintenance action value is calculated (S307). When evaluation of all candidates of maintenance action is completed (S308), one maintenance action having the maximum maintenance action value is selected (S309), and outputted as the facility maintenance plan via a display.

In above-mentioned, the second example as the optimum maintenance strategy (the reference strategy is executed in Δ T from the present timing t, and the optimum action is searched only at the timing s) was explained. However, in the first example (the reference strategy is not executed from the present timing t to the timing s, and the optimum action is searched at each search timing therein), in the same way, the maintenance action at the present timing t can be determined. In the first example, the reference strategy is not executed. Accordingly, the calculation method is different from that in the second example. Hereinafter, the calculation method in the first example is explained.

In the same way as above-mentioned, at the present timing t, if the system is maintained by each candidate of maintenance action, a next state transited from the present state of the system is specified. Assume that the system is degraded by the fault model from the present timing t to a predetermined timing T (For example, completion timing of life cycle of the system), and the system is maintained by the reference strategy from a timing s (after ΔT from the present timing t) to the predetermined timing T. Here, as the reference strategy, a result of the long term simulation may be used, or the reference strategy simulation may be actually executed. By setting at least one search point in a search period ΔT (from the present timing t to the timing s), a combination of optimum maintenance actions to maximize the maintenance action value (based on system output and maintenance cost) from the present timing t to the predetermined timing T is searched at each search point. In this case, by multiplying the system output with the electric power selling price and by subtracting the maintenance cost (maintenance cost at the present timing t, maintenance cost in the reference strategy) from the product, the maintenance action value is calculated. In comparison with the second example, the optimum search is executed many times, and the calculation amount thereof is larger. However, the calculation method itself is simple.

Moreover, the present embodiment can be applied to a maintenance action that a plurality of modules is replaced. Furthermore, when DC-DC converter to switch ON/OFF of DC-DC function is installed, the present embodiment can be applied to a maintenance action such as ON/OFF of this function.

Furthermore, the present embodiment can be applied to a fault (such as degradation of a connector or a power cable) except for PV module and a maintenance plan thereof. Furthermore, as PV power generation performance data stored in the PV facility DB 201, performance of all PV modules need not be stored. While several module-faults are detected, by assuming that other modules have standard degradation, the simulation can be executed. Furthermore, in the present embodiment, the electric power selling price may be replaced with a power generation price. For example, such as a deletion one from a power purchase price by PV power generation or an emission rights-transaction price corresponding to $CO_2$ deleted by PV, coefficients able to replace the power generation amount with a money value can be used.

According to the present embodiment, in the large scaled PV (Photovoltaic power generation) system, a power generation efficiency can be maintained with a low cost. Briefly, the apparatus for determining the optimum maintenance plan using theory of dynamic programming can be realized.

Thus far, the PV (Photovoltaic power generation) system was explained as the example. However, the present embodiment is not limited to this system, and can be applied to another system such as a large scaled storage buttery system. Because, in the large scaled storage buttery system, in the same way as the PV system, if same units are connected in serial-parallel, degradation of performance thereof occurs.

While certain embodiments have been described, these embodiments have been presented by way of examples only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

**Claims**

1. An apparatus for determining a maintenance plan, **characterized by**:

a maintenance action and cost database (203) to store a plurality of maintenance actions executable for a system and a plurality of maintenance costs each differently corresponding to each of the plurality of maintenance actions;

a reference strategy database (203) to store a reference strategy determining a maintenance action to be executed for the system, based on a degradation or an output of the system;

a fault model database (202) to store a fault model stochastically representing an occurrence of the degradation;

a simulation unit (104, 105, 106) configured, if the system is respectively maintained by each maintenance action at a first timing, if the system is degraded by the fault model from the first timing to a predetermined timing, and if the system is maintained by the reference strategy from a second timing after passing a predetermined period from the first timing to the predetermined timing, to set at least one search timing in a search period from the first timing to the second timing, and to calculate a maintenance action value of each maintenance action at the search timing, based on the output and a maintenance cost corresponding to the maintenance action by which the system is maintained from the first timing to the predetermined timing; and

a maintenance plan search unit (107) configured to select an optimum maintenance action from the plurality of maintenance actions, based on the maintenance action value of each maintenance action.

2. The apparatus according to claim 1, further comprising:

a selling price database (201) to store a selling price of a unit output of the system;

wherein the maintenance action value is calculated by multiplying the output with the selling price and by subtracting the maintenance cost from a product of the output and the selling price.

3. The apparatus according to claim 1 or 2, further comprising:

a reference strategy long term simulation unit (103) configured to simulate each transition of the output and the maintenance cost based on the fault model and the reference strategy in a life cycle period of the system from an initial state of the system, and to acquire output data and maintenance cost data based on a simulation result;

wherein, if the system is degraded and maintained by the fault model and the reference strategy from the second timing to the predetermined timing,

the simulation unit (104, 105, 106) acquires each transition of the output and the maintenance cost by using the output data and the maintenance cost data.

4. The apparatus according to claim 3, wherein

the reference strategy long term simulation unit (103) acquires the output data and the maintenance cost data of each subsystem able to be divided from the system by the maintenance action, and

the simulation unit (104, 105, 106) processes the each subsystem when the system is divided into the each subsystem.

5. The apparatus according to one of claims 1 to 4, wherein

the simulation unit (104, 105, 106) searches the optimum maintenance action at the second timing as the search timing, and maintains the system by the reference strategy from the first timing to the second timing.

6. The apparatus according to claim 5, further comprising:

a reference strategy long term simulation unit (103) configured to simulate each transition of the output and the maintenance cost based on the fault model and the reference strategy in a life cycle period of the system from an initial state of the system, and to acquire output data and maintenance cost data based on a simulation result; wherein the simulation unit (104, 105, 106),

(1) if the reference strategy is executed from the first timing to the second timing, and if the simulation result by the reference strategy long term simulation unit (103) is used from the first timing to the second timing, calculates a fault tolerance state value based on each difference between both outputs and between both maintenance costs of the system,

(2) if the optimum maintenance action is executed from the first timing to the second timing, and if the reference strategy is executed from the first timing to the second timing, calculates a maintenance validity state value based on each difference between both outputs and both maintenance costs of the system,

(3) calculates a reference strategy state value based on partial data from a third timing when the output is first acquired after maintaining at the first timing to a fourth timing corresponding to the predetermined timing among the output data, and partial data from the third timing to the fourth timing among the maintenance cost data, and

calculates the maintenance action value by subtracting the maintenance cost from a sum of the reference strategy state value, the fault tolerance state value and the maintenance validity state value.

**7.** The apparatus according to claim 6, wherein
the simulation unit (104, 105, 106) calculates the fault tolerance state value by multiplying a first value based on the each difference at (1) with a ratio of a time length between the first timing and the predetermined timing to a time length between the first timing and the second timing, and calculates the maintenance validity state value by multiplying a second value based on the each difference at (2) with the ratio.

**8.** The apparatus according to claim 7, further comprising:

a selling price database (201) to store a selling price of a unit output of the system;
wherein the simulation unit (104, 105, 106) calculates the first value by multiplying the difference between both outputs at (1) with the selling price and by subtracting the difference between both maintenance costs at (1) from a product of the difference between both outputs at (1) and the selling price, and calculates the second value by multiplying the difference between both outputs at (2) with the selling price and by subtracting the difference between both maintenance costs at (2) from a product of the difference between both outputs at (2) and the selling price.

**9.** The apparatus according to one of claims 1 to 8, wherein
the system is a photovoltaic power generation system, and
the output is a power generation.

**10.** The apparatus according to claim 9, wherein
the photovoltaic power generation system includes a PV module array in which a plurality of strings is connected in parallel, each string including a plurality of PV modules connected in serial, and
the maintenance action includes replacement of the PV module and addition of a DC-DC converter to the string.

**11.** The apparatus according to claim 10, wherein
the fault model represents that a current or a voltage of the PV module is stochastically varied, and that a direct current of the PV module is stochastically raised.

**12.** A method for determining a maintenance plan, **characterized by**:

reading a maintenance action and cost database (203) that stores a plurality of maintenance actions executable for a system and a plurality of maintenance costs each differently corresponding to each of the maintenance actions;
reading a reference strategy database (203) that stores a reference strategy determining a maintenance action to be executed for the system, based on a degradation or an output of the system;
reading a fault model database (202) that stores a fault model stochastically representing an occurrence of the degradation;

if the system is respectively maintained by each maintenance action at a first timing, if the system is degraded by the fault model from the first timing to a predetermined timing, and if the system is maintained by the reference strategy from a second timing after passing a predetermined period from the first timing to the predetermined timing,

setting at least one search timing in a search period from the first timing to the second timing;

calculating a maintenance action value of each maintenance action at the search timing, based on the output and a maintenance cost corresponding to the maintenance action by which the system is maintained from the first timing to the predetermined timing; and

selecting an optimum maintenance action from the plurality of maintenance actions, based on the maintenance action value of each maintenance action.

FIG.1

FIG.2

START

READ PV FACILITY DB, FAULT MODEL DB,
MAINTENANCE STRATEGY DB ~301

EXECUTE A REFERENCE STRATEGY
LONG TERM SIMULATION ~302

SELECT ONE FROM CANDIDATES
OF MAINTENANCE ACTION ~303

305

EXECUTE AN OPTIMUM STRATEGY
SHORT TERM SIMULATION

304

CALCULATE A REFERENCE
STRATEGY STATE VALUE

CALCULATE AN OPTIMUM
STRATEGY STATE VALUE

306

CALCULATE A VALUE OF MAINTENANCE ACTION ~307

ALL CANDIDATES
ARE EVALUATED? 308

NO

YES

OUTPUT A FACILITY MAINTENANCE PLAN
HAVING THE LARGEST VALUE ~309

END

FIG.3

FIG.4

EP 2 645 313 A1

FIG.5

EP 2 645 313 A1

| ARRAY | STRING | MODULE | DC-DC CONVERTER |
|---|---|---|---|
| 1 | 1 | 1, 2, 3, 4 | - |
| | 2 | 5, 6, 7, 8 | - |
| | 3 | 9, 10, 11, 12 | - |

601

FIG.6A

| MODULE | CURRENT VALUE | VOLTAGE VALUE | DC RESISTANCE VALUE |
|---|---|---|---|
| NEW | 5A | 40V | 0Ω |
| 8 | 5A | 30V | 0Ω |
| 9 | 2.5A | 40V | 0Ω |
| 11 | 5A | 20V | 0Ω |

602

FIG.6B

| DATE | TARGET | CONTENT |
|---|---|---|
| (NON) | — | — |

603

FIG.6C

| TERM | UNIT PRICE (YEN/kWh) |
|---|---|
| 1st~10th YEAR | 40 |
| 11th YEAR~ | 30 |

604

FIG.6D

605

| 1 | 2 | 3 | 4 |
|---|---|---|---|
| 5 | 6 | 7 | 8 |
| 9 | 10 | 11 | 12 |

FIG.6E

701

702

CURRENT ... VOLTAGE

CURRENT ... 8 ... VOLTAGE

CURRENT ... 11 ... 9 ... VOLTAGE

FIG.7A

CURRENT

703 704 705

NORMAL

VOLTAGE FAULT

CURRENT FAULT

VOLTAGE

FIG.7B

| FAULT MODE | LEVEL 0 (STANDARD) | LEVEL 1 | | LEVEL 2 | |
|---|---|---|---|---|---|
| | | DEGREE | FREQUENCY | DEGREE | FREQUENCY |
| FALL OF CURRENT | -0.5%/ YEAR | -25% | 0.005 TIMES/YEAR | -50% | 0.001 TIMES/YEAR |
| FALL OF VOLTAGE | -0.5%/ YEAR | -25% | 0.005 TIMES/YEAR | -50% | 0.001 TIMES/YEAR |
| INCREASE OF DC RESISTANCE | +0.1Ω/ YEAR | +1Ω | 0.005 TIME/YEAR | +5Ω | 0.001 TIMES/YEAR |

FIG.8

901

| MAINTENANCE ACTION ID | NAME OF MAINTENANCE ACTION | COST (YEN) | NOTE |
|---|---|---|---|
| a1 | NO CHANGE | 0 | - |
| a2 | REPLACEMENT OF MODULE | 100000 | - |
| a3 | ADDITION OF DC-DC CONVERTER | 150000 | EFFICIENCY 0.95 |

FIG.9A

902

| ACTION | CONDITION |
|---|---|
| REPLACEMENT OF ALL MODULES | SYSTEM OUTPUT FALLS ABOVE 30% OF DESIGN VALUE |
| ADDITION OF DC-DC CONVERTER | STRING CURRENT VALUE IS 0 |

FIG.9B

FIG.10

EP 2 645 313 A1

FIG.11

FIG.12

EP 2 645 313 A1

1301

| MAINTENANCE ACTION ID | TARGET ID | NAME OF MAINTENANCE ACTION | COST (10000YEN) | OUTPUT VOLTAGE | OUTPUT CURRENT | OUTPUT POWER | REFERENCE STRATEGY STATE VALUE (10000YEN) |
|---|---|---|---|---|---|---|---|
| a1 | – | NO CHANGE | 0 | 140V | 12.5A | 1.75kW | 107 |
| a2 | 11 | REPLACEMENT OF MODULE 11 | 10 | 150V | 12.5A | 1.87kW | 114 |
| a2 | 9 | REPLACEMENT OF MODULE 9 | 10 | 140V | 15A | 2.10kW | 128 |
| a3 | 3 | ADDITION OF DC-DC CONVERTER TO STRING 3 | 15 | {150V, 140V} | {10A, 2.5A} | {1.5kW, 0.35kW} | 113 |

Power(1101)
Price(1303)
Cost(1102)

Power$^{3PX4S}(g_0)$

1.87

1302

1101

1304

1303

t

t+T

1305

1102

Time

0

FIG.13

FIG.14

| MAINTENANCE ACTION ID | TARGET ID | NAME OF MAINTENANCE ACTION | COST (10000YEN) | OUTPUT POWER | REFERENCE STRATEGY STATE VALUE (10000YEN) | FAULT TOLERANCE STATE VALUE | MAINTENANCE VALIDITY STATE VALUE | STATE VALUE | MAINTENANCE ACTION VALUE |
|---|---|---|---|---|---|---|---|---|---|
| a1 | – | NO CHANGE | 0 | 1.75kW | 107 | 0 | 10 | 117 | 117 |
| a2 | 11 | REPLACEMENT OF MODULE 11 | 10 | 1.87kW | 114 | 10 | 4 | 128 | 118 |
| a2 | 9 | REPLACEMENT OF MODULE 9 | 10 | 2.10kW | 128 | – 5 | 4 | 127 | 117 |
| a3 | 3 | ADDITION OF DC-DC CONVERTER TO STRING 3 | 15 | {1.5kW, 0.35kW} | 113 | 5 | 2 | 120 | 105 |

1501

FIG.15

EP 2 645 313 A1

EP 2 645 313 A1

PV MODULE    S10

FAULT MONITORING SYSTEM    S80

POWER CONDITIONER

PV STRING    S20

S30    PCS    TO SYSTEM

S100    S90

DB

NETWORK    S70

S40    S50    S60

MEASUREMENT DEVICE    DATA COLLECTION DEVICE    COMMUNICATION DEVICE

FIG.16

1301

| MAINTENANCE ACTION ID | TARGET ID | NAME OF MAINTENANCE ACTION | COST (10000YEN) | OUTPUT VOLTAGE | OUTPUT CURRENT | OUTPUT POWER | REFERENCE STRATEGY STATE VALUE (10000YEN) |
|---|---|---|---|---|---|---|---|
| a1 | - | NO CHANGE | 0 | 140V | 12.5A | 1.75kW | 107 |
| a2 | 11 | REPLACEMENT OF MODULE 11 | 10 | 150V | 12.5A | 1.87kW | 114 |
| a2 | 9 | REPLACEMENT OF MODULE 9 | 10 | 140V | 15A | 2.10kW | 128 |
| a3 | 3 | ADDITION OF DC-DC CONVERTER TO STRING 3 | 15 | {150V, 140V} | {10A, 2.5A} | {1.5kW, 0.35kW} | 113 |

$$V(a1, -) = \int_{t}^{t+T} Price(\tau) * Power^{3PX4S}(g_0, \tau) - Cost(\tau)d\tau = 107\ 0000$$

Power(1101)
Price(1303)
Cost(1102)

Power$^{3PX4S}(g_0)$

1702  1101

t    t+T

1.75

1303

1102

Time

0

FIG.17

30

1301

| MAINTENANCE ACTION ID | TARGET ID | NAME OF MAINTENANCE ACTION | COST (10000YEN) | OUTPUT VOLTAGE | OUTPUT CURRENT | OUTPUT POWER | REFERENCE STRATEGY STATE VALUE (10000YEN) |
|---|---|---|---|---|---|---|---|
| a1 | - | NO CHANGE | 0 | 140V | 12.5A | 1.75kW | 107 |
| a2 | 11 | REPLACEMENT OF MODULE 11 | 10 | 150V | 12.5A | 1.87kW | 114 |
| a2 | 9 | REPLACEMENT OF MODULE 9 | 10 | 140V | 15A | 2.10kW | 128 |
| a3 | 3 | ADDITION OF DC-DC CONVERTER TO STRING 3 | 15 | {150V, 140V} | {10A, 2.5A} | {1.5kW, 0.35kW} | 113 |

$$V(a2,9) = \int_{t}^{t+T} Price(\tau) * Power^{3PX4S}(g_0, \tau) - Cost(\tau)d\tau = 128\,0000$$

FIG.18

1301

| MAINTENANCE ACTION ID | TARGET ID | NAME OF MAINTENANCE ACTION | COST (10000YEN) | OUTPUT VOLTAGE | OUTPUT CURRENT | OUTPUT POWER | REFERENCE STRATEGY STATE VALUE (10000YEN) |
|---|---|---|---|---|---|---|---|
| a1 | - | NO CHANGE | 0 | 140V | 12.5A | 1.75kW | 107 |
| a2 | 11 | REPLACEMENT OF MODULE 11 | 10 | 150V | 12.5A | 1.87kW | 114 |
| a2 | 9 | REPLACEMENT OF MODULE 9 | 10 | 140V | 15A | 2.10kW | 128 |
| a3 | 3 | ADDITION OF DC-DC CONVERTER TO STRING 3 | 15 | {150V, 140V} | {10A, 2.5A} | {1.5kW, 0.35kW} | 113 |

$$V(a3,3) = \int_{t}^{t+T} Price(\tau) * Power^{2PX4S}(g_0, \tau) - Cost(\tau)d$$

$$+ \int_{t}^{t+T} Price(\tau) * Power^{1PX4S}(g_0, \tau) - Cost(\tau)d = 113\,0000$$

Power(1201)
Price(1303)
Cost(1102)

Power$^{2PX4S}$(g$_0$)

1.5

1902    t    1201

t+T

1303

1102    Time

0

Power(1202)
Price(1303)
Cost(1102)

Power$^{1PX4S}$(g$_0$)

0.35    1903    1202

t    t+T

1303

1102    Time

0

FIG.19

EP 2 645 313 A1

Europäisches
Patentamt
European
Patent Office
Office européen
des brevets

# EUROPEAN SEARCH REPORT

**Application Number**

EP 12 19 7731

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2008/162081 A1 (SATO MAKOTO [JP]) 3 July 2008 (2008-07-03) * abstract * * paragraph [0010] - paragraph [0067] * * paragraph [0091] - paragraph [0099] * * paragraph [0113] - paragraph [0122] * ----- | 1-12 | INV. G06Q10/00 G05B23/02 G06Q10/06 |
| X | US 6 799 154 B1 (ARAGONES JAMES KENNETH [US] ET AL) 28 September 2004 (2004-09-28) * abstract * * column 1, line 54 - column 2, line 36 * * column 3, line 37 - column 5, line 65 * ----- | 1-12 | |
| X | US 2005/149570 A1 (SASAKI KEIICHI [JP] ET AL) 7 July 2005 (2005-07-07) * abstract * * paragraph [0023] - paragraph [0032] * * paragraph [0070] - paragraph [0107] * ----- | 1-12 | |
| | | | TECHNICAL FIELDS SEARCHED (IPC) G06Q G05B |

The present search report has been drawn up for all claims

| Place of search | Date of completion of the search | Examiner |
|---|---|---|
| The Hague | 1 July 2013 | Lozza, Mario |

EPO FORM 1503 03.82 (P04C01)

**ANNEX TO THE EUROPEAN SEARCH REPORT
ON EUROPEAN PATENT APPLICATION NO.**                    EP 12 19 7731

This annex lists the patent family members relating to the patent documents cited in the above-mentioned European search report.
The members are as contained in the European Patent Office EDP file on
The European Patent Office is in no way liable for these particulars which are merely given for the purpose of information.

01-07-2013

| Patent document cited in search report | | Publication date | Patent family member(s) | | | Publication date |
|---|---|---|---|---|---|---|
| US 2008162081 | A1 | 03-07-2008 | CN | 101221636 | A | 16-07-2008 |
| | | | JP | 4282717 | B2 | 24-06-2009 |
| | | | JP | 2008165352 | A | 17-07-2008 |
| | | | US | 2008162081 | A1 | 03-07-2008 |
| US 6799154 | B1 | 28-09-2004 | EP | 1160712 | A2 | 05-12-2001 |
| | | | JP | 4846923 | B2 | 28-12-2011 |
| | | | JP | 2002149868 | A | 24-05-2002 |
| | | | US | 6799154 | B1 | 28-09-2004 |
| US 2005149570 | A1 | 07-07-2005 | CN | 1629867 | A | 22-06-2005 |
| | | | EP | 1544771 | A1 | 22-06-2005 |
| | | | JP | 4237610 | B2 | 11-03-2009 |
| | | | JP | 2005182465 | A | 07-07-2005 |
| | | | US | 2005149570 | A1 | 07-07-2005 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005011327 A